# EUROPEAN PATENT APPLICATION

(11) **EP 1 195 096 A1**
(43) Date of publication of application: **10.04.2002**
(21) Application number: 01308593.1
(22) Date of filing: 08.10.2001
(51) Int. Cl.: A23G 9/28

(54) **Ice cream vending machine**

(30) Priority: 09.10.2000 KR 2000059357; 19.02.2001 KR 2001008271; 05.07.2001 KR 2001039923
(71) Applicant: Samsung Kwangju Electronics Co., Ltd., Kwangju-city (KR)
(72) Inventor: Kim, Sung-jung, Kwangsan-gu, Kwangju-city (KR); Lee, Man-seob, Kwangsan-gu, Kwangsan-city (KR)
(74) Representative: Blatchford, William Michael

(57) **Abstract**

An ice cream vending machine is capable of vending ice cream in an optimum state by substantially preventing residual, melted ice-cream, from remaining in the machine. The vending machine includes a cooling system (10), a freezing chamber (20) cooled by the cooling system, a canister (30) provided within the freezing chamber and arranged to hold bead-type ice cream, a cup supplying device (40) outside the freezing chamber, an ice cream discharging device (50) for discharging the bead-type ice cream from the canister, and cup conveying means (80) for conveying a cup supplied by the cup supplying device. The cup is conveyed between a location where the cup is supplied by the cup supplying device and a location where the ice cream is discharged from the freezing chamber by the discharging device.

## Description

The present invention relates to an ice cream vending machine, and more particularly to an ice cream vending machine for vending bead-type ice cream, i.e. ice cream which is frozen in the form of granules that are 3mm-7mm in diameter, whilst the machine is unattended.

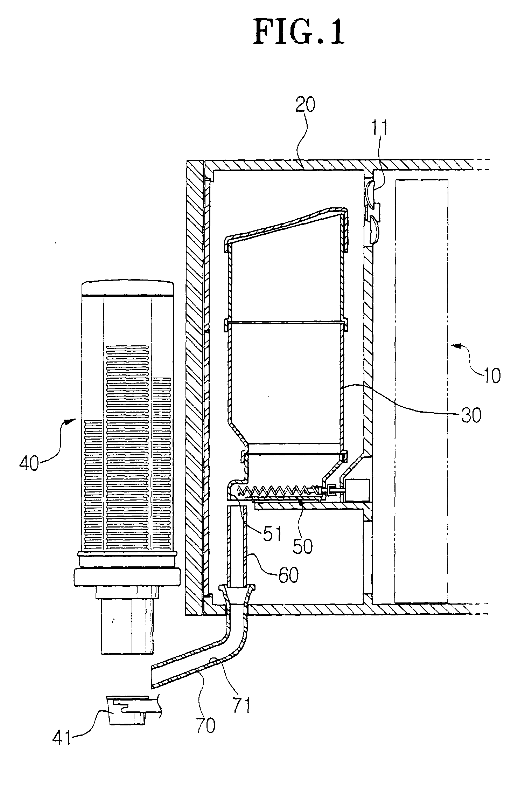

Figure 1 shows an ice cream vending machine. This vending machine is disclosed in European patent application no. 01307595.7.

As shown in Figure 1, the ice cream vending machine includes a cooling system 10, a freezing chamber 20, a canister 30, a cup supplying device 40, an ice cream discharging device 50, a chute 60, and a guide member 70.

The cooling system 10 is substantially identical to a general refrigeration unit. After being cooled by the cooling system 10, air is blown into the freezing chamber 20 by a fan 11. As Figure 1 shows, inside the freezing chamber 20, a canister 30 is provided. The canister 30 is filled with bead-type ice cream frozen into the shape of granules, the granules having a diameter of between 3 and 7mm. The freezing chamber 20 is maintained at a temperature in the range of approximately -43°C to -27°C.

The cup supplying device 40 is situated outside the freezing chamber 20, and is arranged to supply a cup 41 for holding the ice cream. The ice cream discharging device 50 is provided at a lower portion of the canister 30. The cup supplying device 40 and the ice cream discharging device 50 are substantially identical to ones generally available.

The chute 60 is arranged below a discharging port 51 of the discharging device 50, and directs the discharged ice cream into a particular path. Guide member 70 is arranged below the chute 60 for guiding the discharged ice cream into the cup 41.

In use of the above-described ice cream vending machine, a customer first feeds a coin of a predetermined amount into the vending machine and then operates a selection button. By means of the cup supplying device 40, a cup 41 is supplied at a predetermined position below the guide member 70. Next, the ice cream discharging device 50 is operated, and the ice cream is discharged. Specifically, the ice cream is discharged into the cup 41 through the chute 60 and a passage 71 of the guide member 70. The customer can then remove the cup 41 and consume the ice cream.

In this ice cream vending machine, the ice cream is guided by the guide member 70 from an outlet to a location where the cup 41 is supplied at normal temperature. As ice cream passes through the passage 71 of the guide member 70, the ice cream partially melts and the ice cream may not be served in its optimum state, whilst residual ice cream remains in the passage 71 of the guide member 70.

Over time, this remaining ice cream goes off, and accordingly, a machine operator has to frequently clean the vending machine.

It is an aim of the present invention to provide an improved ice cream vending machine.

According to a first aspect of the present invention, there is provided an ice cream vending machine, comprising: a cooling system; a freezing chamber cooled by the cooling system; a canister arranged within the freezing chamber, and arranged to hold bead-type ice cream; a cup supplying device arranged externally to the freezing chamber and arranged to supply a cup for holding the bead-type ice cream; an ice cream discharging device for discharging the bead-type ice cream from the canister; and a conveying means for conveying a cup between a first location where the cup is supplied by the cup supplying device to a further location where the ice cream is discharged from the ice cream discharging device.

According to a second aspect of the present invention, there is provided an ice cream vending machine, comprising: a chamber, cooled by a cooling system, for storing bead-type ice cream; cup supplying means; and cup conveying means for moving a cup between a first position, where a cup is supplied from the cup supplying means, and a further position which is substantially adjacent an opening arranged in a wall of the chamber, the vending machine being arranged to dispense bead-type ice cream from the chamber directly into the cup.

The invention will now be described, by way of example, with reference to the accompanying drawings in which:
Figure 1 is a partially sectioned side view of a conventional ice cream vending machine;
Figure 2 is a partially sectioned side view of a first ice cream vending machine in accordance with the invention;
Figure 3 is a partially sectioned side view of a cup conveyor in the vending machine of Figure 2;
Figure 4 is a partially sectioned side view of a second ice cream vending machine in accordance with the invention;
Figure 5 is a partially sectioned side view of a cup conveyor in the ice cream vending machine of Figure 4;
Figures 6A to 6F are partially sectioned side views of the vending machine of Figure 4 showing a sequence of operations performed by the cup conveyor; and
Figure 7 is a partially sectioned side view of a cup supporting member forming part of the cup conveyor of the vending machine of Figure 4.

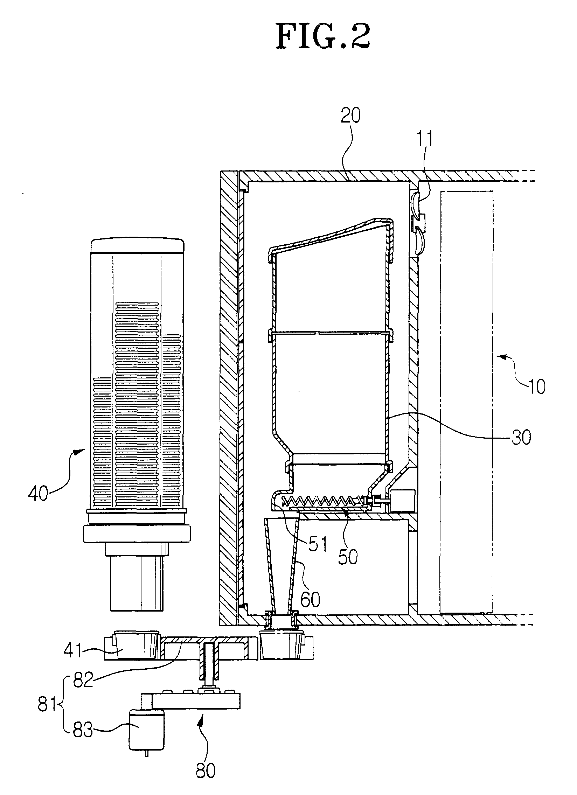

Referring to Figure 2, a first ice cream vending machine in accordance with the invention includes a cooling system 10, a freezing chamber 20, a canister or hopper 30, a cup supplying device 40, and an ice cream discharging device 50. The cooling system 10 is substantially identical to a general refrigerating device. Once cooled by the cooling system 10, air is blown into the freezing chamber 20 by a fan 11. As Figure 2 shows, the canister 30 is arranged in the freezing chamber 20. The canister 30 is filled with bead-type ice cream, frozen into a granular form and having a diameter of between 3 and 7mm. In order to maintain the bead shape of the ice cream, the freezing chamber 20 is maintained at a temperature ranging between -43°C to -27°C.

The cup supplying device is arranged outside the freezing chamber 20, and is arranged to supply a cup 41 for holding the ice cream. The ice cream discharging device 50 is provided at the bottom of the canister 30. The cup supplying device 40 and the ice cream discharging device 50 are conventional.

Below a discharging port 51 of the ice cream discharging device 50, a chute 60 is provided for collecting ice cream which has been discharged, and for directing the ice cream through a certain path. Regardless of the position of the canister 30, ice cream can be discharged outside the freezing chamber 20.

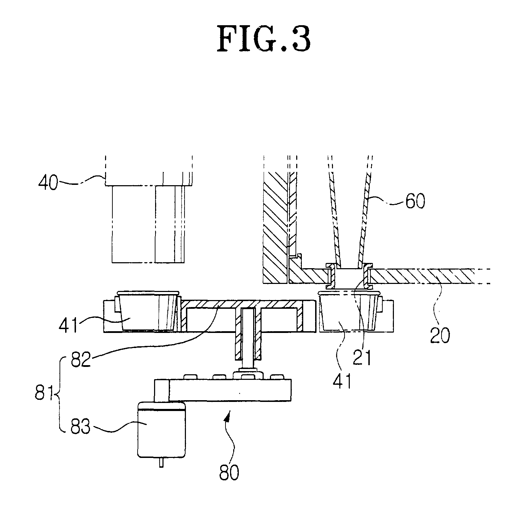

As will become clear, between the location (hereinafter called the'first location') where the cup 41 is supplied by the cup supplying device 40, and the location (hereinafter called the 'third location') where the ice cream is discharged, cup conveying means 80 is provided. Figure 3 shows the cup conveying means 80.

Referring to Figure 3, the cup conveying means 80 includes a horizontal conveying unit 81. The conveying unit 81 includes a cup holder 82 and a motor 83 for rotating the cup holder 82. When the motor 83 is driven, the cup holder 82 is rotated between the first and third locations. Various methods for implementing the conveying unit are known in various fields. Accordingly, it should be understood that the horizontal conveying unit 81 of Figure 3 is exemplary and alternative mechanisms, including linear or rotary conveying devices, or the like, can be used.

In this first ice cream vending machine in accordance with the invention, when a customer feeds a coin of a predetermined amount into the vending machine. and presses a selection button, the cup 41 is supplied to the cup holder 82 at the first location by the cup supplying device 40. Next, motor 83, which acts as an actuator for the conveying unit 81, is operated, and accordingly the cup 41 is conveyed from the first to the third location. Then, the ice cream discharging device 50 is operated and accordingly, bead-type ice cream is discharged through the discharging port 51.

The discharged ice cream is guided into the cup 41 through the chute 60 and an ice cream outlet 21 provided below the chute motor 83 is driven, and accordingly, the cup 41 is conveyed from the third location to the first location. The customer then removes the cup 41 and may consume the ice cream.

In this first embodiment of th invention, since the cup 41 is conveyed between the first and third locations by the cup conveying means 80, the ice cream can be supplied directly into the cup 41 from the freezing chamber 20.

Unlike the conventional vending machine, the ice cream will not be supplied at normal room temperature, and accordingly, the ice cream can be served to a customer in an optimum state. Maintenance of the machine is also more convenient.

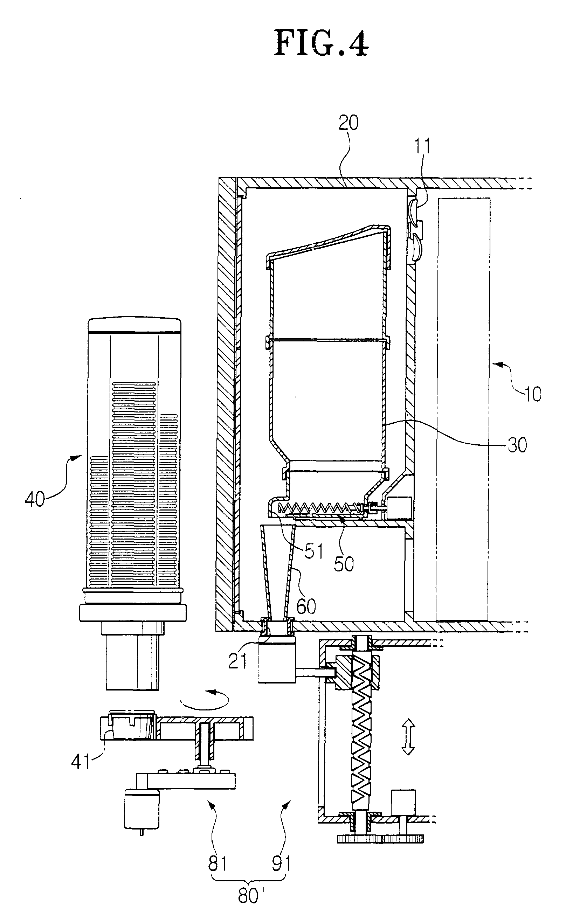

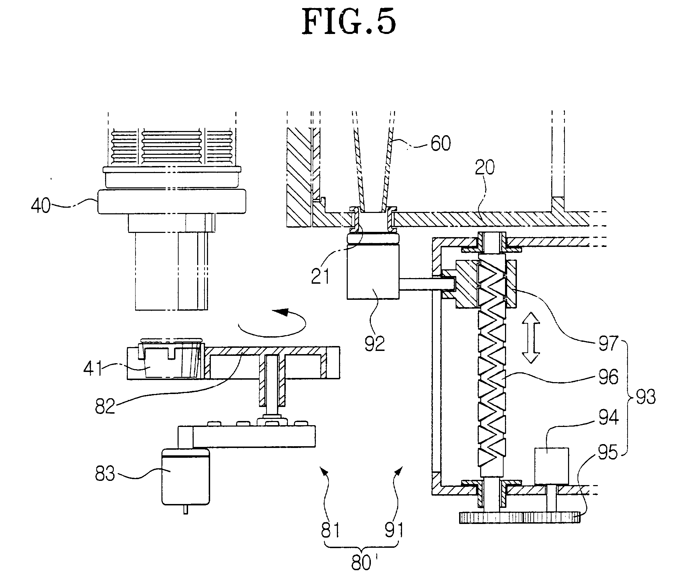

Figure 4 shows a second ice cream vending machine in accordance with the invention. In this embodiment, and unlike the first embodiment, the first and the third locations are not on the same plane. Apart from the above-mentioned difference, the second embodiment is almost identical to that of the first preferred embodiment. Specifically, apart from the cup conveying means 80', the elements of the second preferred embodiment are substantially identical to those of the first preferred embodiment. Accordingly, like elements between the first and second embodiments, will be referred to by the same reference numerals. Referring to Figure 5, it will be seen that the cup conveying means 80' of the second embodiment includes both a horizontal conveying unit 81 and a vertical conveying unit 91. The horizontal conveying unit 81 includes a cup holder 82. This horizontal conveying unit 81 conveys the cup 41, in a horizontal manner, along a horizontal plane.

The vertical conveying unit 91 includes a cup supporting member 92 and a supporting member conveying means 93 for conveying the cup supporting member 92 in a vertical manner. The vertical conveying unit 91 conveys the cup 41 vertically between the second and the third locations. The supporting member conveying means 93 includes a motor 94, a cam shaft 96, and a cam nut 97. A rotary shaft of the motor 94 is connected to the cam shaft 96 via a driving transmission means, in this case a gear 95.

The cup supporting member 92 is attached to one side of the cam nut 97, and accordingly, the cam nut 97 is rotated together with the cam shaft 96 when the cam shaft 96 rotates. Accordingly, when the motor 94 is driven, the cup supporting member 92 is conveyed upwardly and downwardly.

Although the supporting member conveying means 93 includes the cam shaft 97 and the cam nut 97, this arrangement is not essential. The supporting member conveying means 93 may include other elements, such as a screw and nut.

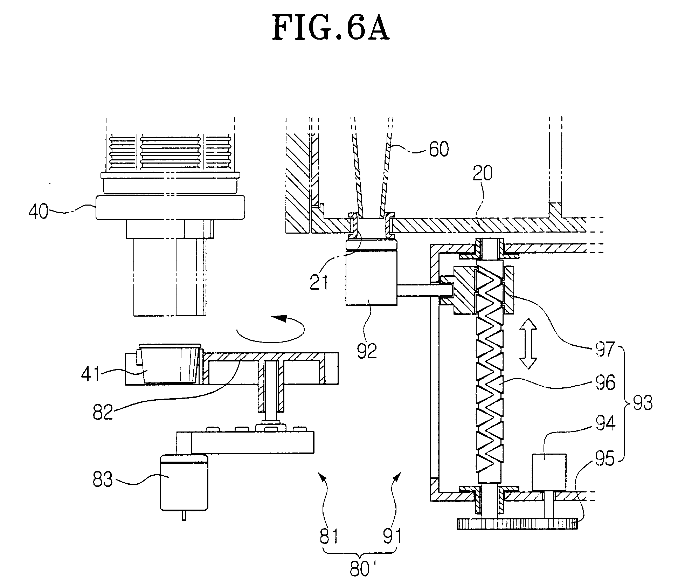

In this second embodiment, when a customer feeds a coin of a predetermined amount into the vending machine, and then operates a selection button, the cup 41 is supplied to the cup holder 82 at the first location by the cup supplying device 40 (see Figure 6A).

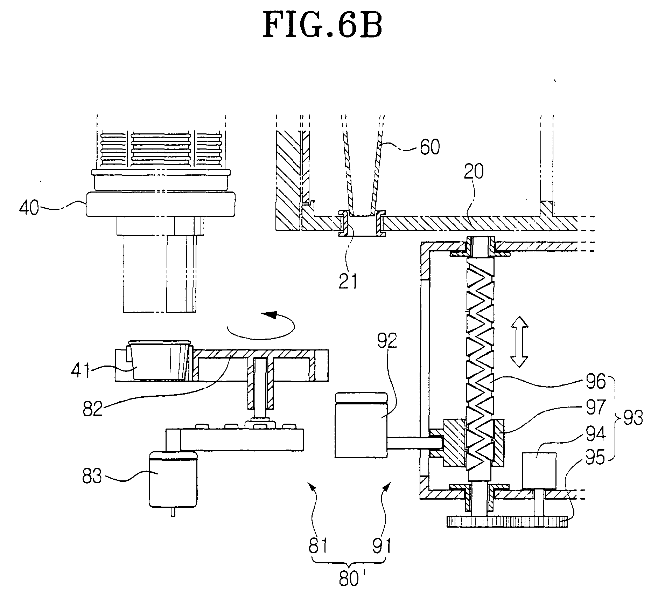

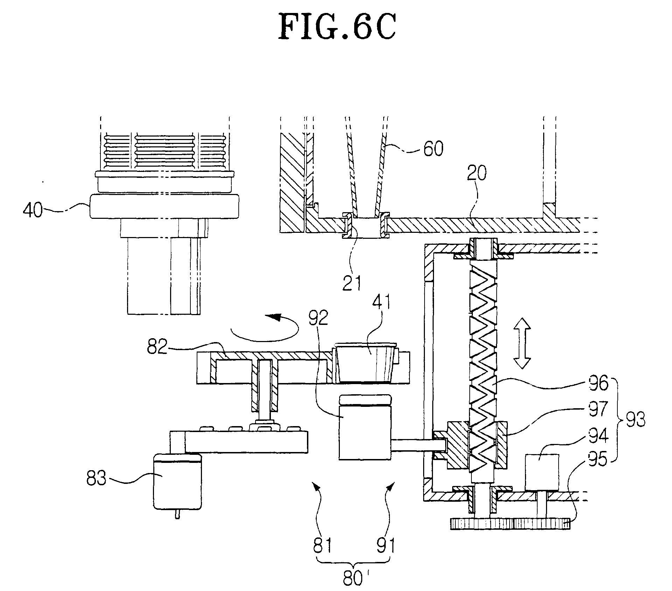

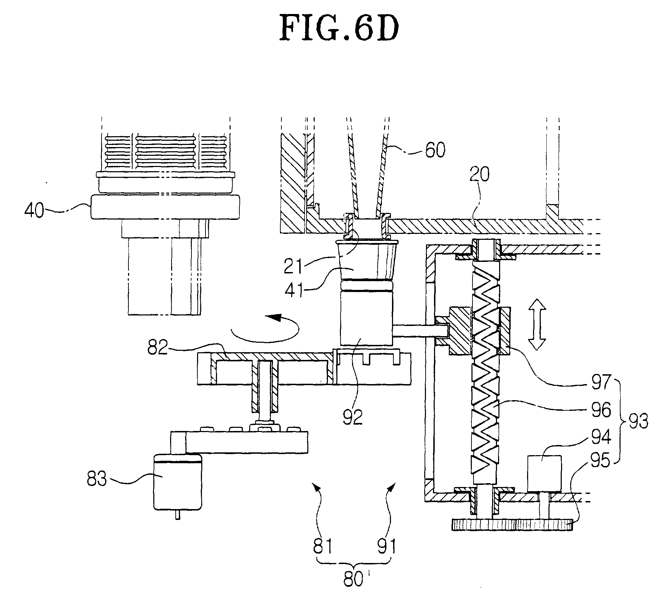

The motor 94 is driven, and the cup supporting member 92, which at this time covers the ice cream outlet 21 of the freezing chamber 20, is moved in a downwards direction, opening the ice cream outlet 21 at the bottom of the freezing chamber 20 (see Figure 6B). Then, the motor 83 is driven, so that the cup 41 is conveyed to the second location (see Figure 6C). Next, the cup 41 is conveyed to the third location by the cup supporting member 92 (see Figure 6D), and following this, the ice cream discharging device 50 is operated, discharging the bead-type ice cream through the discharging port 51.

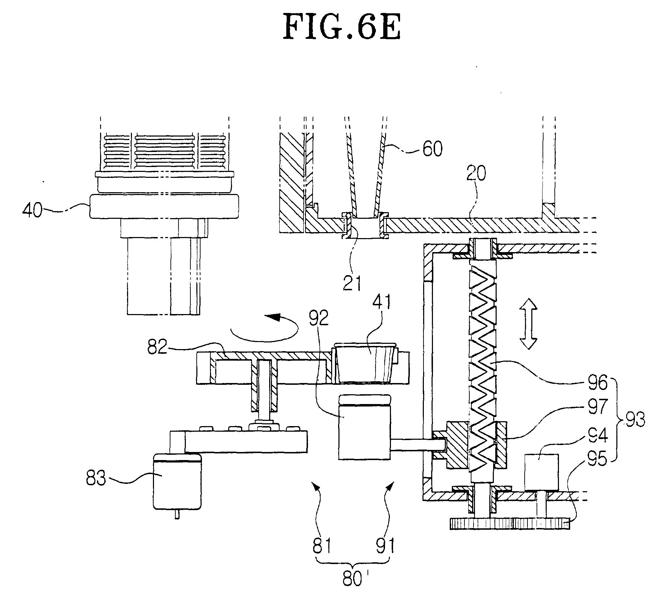

The discharged ice cream is guided into the cup 41, by means of the chute 60 and the ice cream outlet 21. After discharge of the ice cream, the motor 94 is driven so as to convey the cup 41 from the third location to the second location, and to position the cup 41 in the cup holder 82 (see Figure 6E).

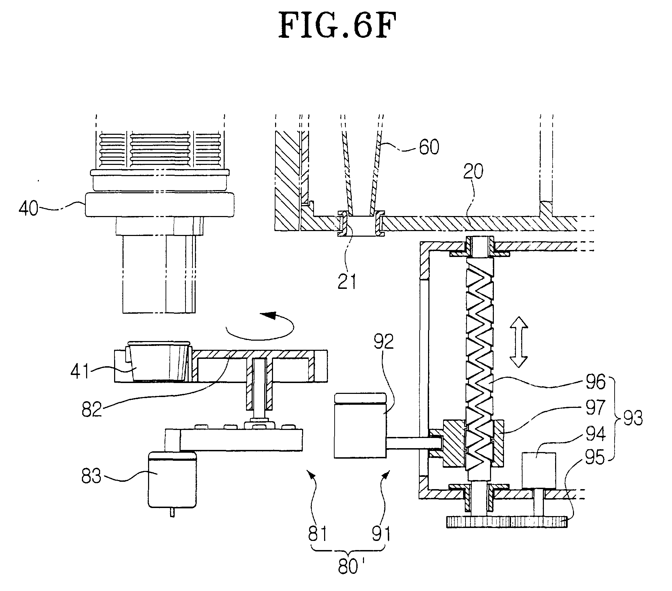

The motor 83 is then driven so that the cup 41 is conveyed to the first location (see Figure 6F). The ice cream outlet 21 of the freezing chamber 20 is then closed by the cup supporting member 92 (see Figure 6A). The customer may then take the cup 41 out, and consume the ice cream.

Since the cup 41 is conveyed between the first and the third locations by the cup conveying means 80'. ice cream can be directly supplied to the cup 41 from the freezing chamber 20. Unlike the conventional ice cream vending machine in which the ice cream is supplied at normal (i.e. room) temperature, the above-described vending machines are able to serve a customer with fresh ice cream. Also. maintenance of the vending machine is improved for the machine operator.

In the second embodiment, while the cup conveying means 80' conveys the cup 41, the cup supporting member 92 of the vertical conveying unit 91 opens and closes the ice cream outlet 21 of the freezing chamber 20. Accordingly, when the vending machine is not in its vending mode, the ice cream outlet 21 of the freezing chamber 20 is closed, preventing loss of cool air and so consumption of electricity which would otherwise be required for maintaining the freezing chamber 20 at an appropriate temperature.

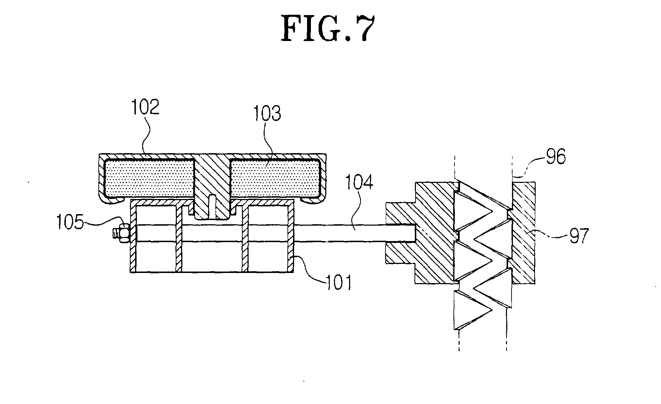

It is preferable that the cup supporting member 92 is formed of a material having great closeness and good thermal insulation. Referring to Figure 7, it will be seen that in the preferred embodiments, the cup supporting member 92 includes a supporting member body 101, a cup mounting member 102, and a thermal insulating member 103. The supporting member body 102 is fastened to the cam nut 97 by a pair of rods 104 and a pair of nuts 105. The cup mounting member 102 is arranged on the upper side of the supporting member body 101, and the thermal insulating member 103 is arranged on the lower side of the cup mounting member 102.

It is also preferable that the cup mounting member 102 and the thermal insulating member 103 are made of material having an appropriate elasticity in order to ensure a good engagement when the ice cream outlet 21 of the freezing chamber 20 is closed by the cup supporting member 92. In the second preferred embodiment of the present invention, the cup mounting member 102 is made of a silicon material, and the thermal insulating member 103 is made of polyurethane foam.

As has been described above, since the cup 41 is conveyed between the first and the third locations by the cup conveying means 80 and 80', the ice cream can be directly supplied into the cup 41 from the freezing chamber 20. Accordingly, unlike the conventional ice cream vending machine in which the ice cream is supplied at a normal temperature, the above-described vending machine serves a customer with fresh ice cream at an optimum condition. Also, the machine operator can maintain the vending machine more easily.

## Claims

1. An ice cream vending machine, comprising:
a cooling system;
a freezing chamber cooled by the cooling system;
a canister arranged within the freezing chamber, and arranged to hold bead-type ice cream;
a cup supplying device arranged externally to the freezing chamber and arranged to supply a cup for holding the bead-type ice cream;
an ice cream discharging device for discharging the bead-type ice cream from the canister; and
conveying means for conveying a cup between a first location where the cup is supplied by the cup supplying device to a further location where the ice cream is discharged from the ice cream discharging device.

2. A vending machine according to claim 1, wherein the first and further location are on the same horizontal plane, the cup conveying means comprising a horizontal conveying unit for conveying a cup supplied by the cup supplying device between the first and the further location.

3. A vending machine according to claim 1, wherein the first and further location are on different horizontal planes, the cup conveying means comprising (i) a horizontal conveying unit for conveying the cup horizontally from the first location to an intermediate location which is perpendicular to an imaginary line between the first and the further location, and (ii) a vertical conveying unit for vertically conveying the cup between the intermediate location and the further location.

4. A vending machine according to claim 3, wherein the vertical conveying unit comprises conveying means for conveying, in a vertical manner, a cup support member, the cup support member being arranged to (i) support a cup during its vertical conveyance, and (ii) to close an ice cream dispensing outlet of the discharging device when the vending machine is not in vending operation.

5. An ice cream vending machine, comprising:
a chamber, cooled by a cooling system, for storing bead-type ice cream;
cup supplying means; and
cup conveying means for moving a cup between a first position, where a cup is supplied from the cup supplying means, and a further position which is substantially adjacent an opening arranged in a wall of the chamber, the vending machine being arranged to dispense bead-type ice cream from the chamber directly into the cup.

6. A vending machine according to claim 5, further comprising, within the chamber, a hopper for holding the bead-type ice cream and a discharge passage extending between the hopper and the chamber wall opening, the hopper being arranged to dispense the bead-type ice cream through the discharge passage to the opening.

7. A vending machine according to claim 6, wherein the discharge passage is substantially vertical.

8. A vending machine according to any of claims 5 to 7, wherein the cup conveying means is arranged to move a cup along a substantially horizontal plane from the first position to the further position.

9. A vending machine according to any of claims 5 to 8, wherein the cup conveying means includes a horizontal conveying means and a vertical conveying means, the horizontal conveying means being arranged to move a cup along a substantially horizontal plane to an intermediate position, and wherein the vertical conveying means is arranged to receive the cup from the intermediate position, and to move the cup in a substantially vertical plane to the further position.

10. A vending machine according to any of claims 5 to 9, wherein the vertical conveying means includes a sealing member for sealing the chamber wall opening and is arranged to cause the sealing member to cover the opening prior to receiving and after delivering a cup.
